## Europäisches Patentamt

## European Patent Office

## Office européen des brevets

(11) Publication number: **0 115 385**
**B1**

(12) **EUROPEAN PATENT SPECIFICATION**

(45) Date of publication of patent specification: **26.10.88**

(51) Int. Cl.⁴: **H 04 L 27/02, H 04 B 7/10**

(21) Application number: **84300121.5**

(22) Date of filing: **09.01.84**

(54) Radio communication system.

(30) Priority: **21.01.83 JP 7448/83**

(43) Date of publication of application:
**08.08.84 Bulletin 84/32**

(45) Publication of the grant of the patent:
**26.10.88 Bulletin 88/43**

(84) Designated Contracting States:
**DE FR GB IT NL**

(56) References cited:
**US-A-2 992 427**
**US-A-3 835 392**

**IRE TRANSACTIONS ON COMMUNICATIONS SYSTEMS, vol. CS-10, no. 1, March 1962, pages 90-95, Professional Group On Communications Systems, New York, US; C.N. CAMPOPIANO et al.:"A coherent digital amplitude and phase modulation scheme"**

(73) Proprietor: **FUJITSU LIMITED**
**1015, Kamikodanaka Nakahara-ku**
**Kawasaki-shi Kanagawa 211 (JP)**

(72) Inventor: **Yazuka, Hiroyuki**
**Kawaracho-danchi 14-1032 1, Kawara-cho**
**Saiwai-ku Kawasaki-shi Kanagawa 210 (JP)**
Inventor: **Nakazawa, Isao**
**24-19 Takamori 3-chome**
**Isehara-shi Kanagawa 259-11 (JP)**

(74) Representative: **Skone James, Robert Edmund et al**
**GILL JENNINGS & EVERY 53-64 Chancery Lane**
**London WC2A 1HN (GB)**

Courier Press, Leamington Spa, England.

## Description

This invention relates to a radion communication system operated in a digital modulation mode in which a carrier is amplitude modulated according to data to be transmitted.

In a radio communication system for transmitting digital data, a carrier is digitally modulated by data which is to be transmitted. A variety of methods have been proposed and put into practice for this purpose, for example the phase shift keying (PSK) modulation method, the frequency shift keying (FSK) modulation method, and the amplitude shift keying (ASK) modulation method.

US—A—3,835,392 discloses a system in which coherent signals of different amplitudes and phases for each other are transmitted using two types of polarisation.

In the on-off keying type ASK modulation method, the carrier is transmitted or not transmitted in accordance with data of logic "1" or "0", respectively. It is therefore advantageous, because the processing operation for transmitting and receiving data is very simple.

However, the on-off keying type ASK modulation method has suffered from several problems. Firstly, because the carrier is transmitted or not transmitted during the transmission of data, the data error rate is higher than that of other modulation methods.

A proposal for overcoming the above problems is disclosed in US—A—2,992,427, in which a single carrier frequency is separately keyed by two binary data signals. Each of the keyed signals is transmitted with a different type of polarisation and a correlation technique is incorporated in the receiver to reduce data error.

Secondly, it is not easy to distinguish the condition where a carrier is not generated, for example because of a pause in the system operation, from the condition where a carrier is not transmitted due to the transmission of data of logic "0". This makes it difficult to employ the on-off keying type ASK modulation method in a system operating in, for example, a time division multiple access (TDMA) mode, in which burst-like data transmission is performed. In the TDMA method, it is not easy to distinguish the condition of burst-like data transmission of logic "0" from the condition where there is a pause in the carrier.

Thirdly, an automatic gain control (AGC) operation is usually essential for the data transmitting and receiving system so as to stabilise the received signal level. In this case, there is no merit in AGC operation when the received signal represents logic "0". Further, it is impossible to establish optimum AGC operation instantaneously for the received signal representing logic "1", i.e. the carrier appearing immediately after a signal of logic "0", because no meaningful AGC is established for the preceding signal of logic "0".

It is an object of the present invention to provide a radio communication system which can deal with these problems.

According to the invention there is provided a radio communication system operated in an amplitude shift keying (ASK) mode, comprising transmitter apparatus operative to generate a carrier, to transform the carrier into a vertically (V)-polarised wave carrier and a horizontally (H)-polarised wave carrier and to feed the polarised wave carriers selectively to a transmission path as a transmission signal, in accordance with logic "1" and "0" values of transmission data to be transmitted, the transmitter operating in the amplitude shift keying mode such that the sum of the amplitudes of both the V- and H- polarised wave carriers is substantially constant; and receiver apparatus operative to receive the transmission signal via the transmission path, to separate the transmission signal into the V-polarised wave carrier and the H-polarised wave carrier, as V- and H-polarised wave receiving signals, and to discriminate the amplitude levels of these V- and H-polarised receiving signals so as to reproduce the logic values of the transmission data as received data; characterised in that the receiver unit comprises, for dealing with the V-polarised wave receiving signal, a high frequency amplifier, and a detector to generate a V-polarised wave detected signal; and for dealing with the H-polarised wave receiving signal, a high frequency amplifier, and a detector to generate a H-polarised wave detected signal; in that both of the V- and H-polarised wave high frequency amplifiers are gain controlled by means of a common automatic gain control circuit comprising an adder to receive both of the V- and H-polarised wave detected signals, to add them absolutely in amplitude, and to feed back the thus-added output to both of the V- and H-polarised wave high frequency amplifiers simultaneously, a differential amplifier to receive both said detected signal, and a discriminator to receive the output from the differential amplifier and to produce the received data.

Embodiments of the invention will now be described, by way of example, with reference to the accompanying drawings, wherein:

Figure 1 illustrates the constitution of a transmitter unit of a radio communication system according to a first embodiment of the present invention;

Figure 2A depicts waveforms of an arbitrary receiving signal modulated using a conventional on-off keying type ASK modulation method;

Figure 2B depicts waveforms of an arbitrary receiving signal modulated using an on-off keying type ASK modulation method according to the present invention;

Figure 3 is a perspective view of an example of a polarizer for use in the method illustrated in Figure 2B;

Figure 4A is a circuit diagram of an example of a polarized wave switching selector forming part of the system of Figure 1A;

Figure 4B is a perspective view exemplifying a structure of the circuit shown in Figure 4A;

Figure 5A illustrates a configuration of a receiver unit provided with an AGC circuit according to the first embodiment;

Figure 5B depicts waveforms of major signals appearing in the receiver unit of Figure 5A;

Figure 6 is a schematic block diagram of one example of a common AGC circuit used in the receiver unit Figure 5A and associated circuitry;

Figure 7 illustrates a modification for improving the receiver unit shown in Figure 5A;

Figure 8 depicts waveforms of the receiving signal, for explaining the role of a threshold level varying circuit shown in Figure 7;

Figure 9 illustrates an example of a discriminator and threshold level varying circuit shown in Figure 7;

Figure 10A illustrates the constitution of a transmitter unit of the system according to the present invention, in which burst-like data transmission is performed;

Figure 10B illustrates the constitution of a receiver unit to be coupled to the transmitter unit shown in Figure 10A;

Figure 10C depicts waveforms of major signals in the transmitter unit of Figure 10A and the receiver unit of Figure 10B for explaining their operation;

Figure 10D is a block diagram of a signal processing circuit shown in Figure 10A;

Figure 10E depicts waveforms of major signals appearing in the circuit of Figure 10D;

Figure 11 depicts waveforms of the transmission signal for explaining the operation of a radio communication system according to a second embodiment of the invention;

Figure 12A illustrates the constitution of a transmitter unit of the system according to the second embodiment;

Figure 12B illustrates the constitution of a receiver unit of the system according to the second embodiment;

Figure 13 is a circuit diagram of an example of a carrier level controller used in Figure 12A;

Figure 14 is a circuit diagram of an example of each variable attenuator used in Figure 12A;

Figure 15 illustrates a modification of the transmitter unit shown in Figure 10A; and

Figure 16 is a circuit diagram of an example of a TDMA controller shown in Figure 15.

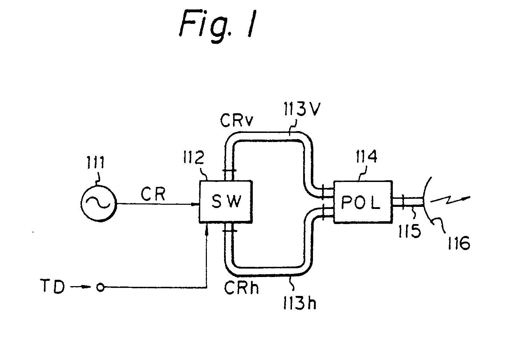

It should be noted that the following descriptions with reference to Figures 1 to 10E relate to a system operated in the on-off keying type ASK modulation mode.

In Figure 1, reference numeral 111 represents an oscillator for producing a carrier CR. The carrier CR is transformed into a V-polarized wave or an H-polarized wave by means of a polarized wave switching selector (SW) 112. Which is of V- and H-polarized waves is to be selected is determined in accordance with the logic "1" or "0" of the transmission data TD. If the V-polarized wave is allotted, in advance, to the logic "1", a carrier $CR_v$ with the V-polarized wave is switched to a waveguide $113_v$, while a carrier $CR_h$ with the other wave, i.e., the H-polarized wave, allotted to the logic "0", is switched to a waveguide $113_h$. The carriers $CR_v$ and $CR_h$ are transferred to a polarizer (POL) 114, fed to a waveguide 115, and then radiated from a common V/H-polarized wave antenna 116. The waveguides $113_v$, $113_h$, and 115 may be rectangular waveguides or circular waveguides. As the antenna 116 radiates the V-polarized wave and also the H-polarized wave, a parabolic antenna, a Cassegrain antenna, or the like may be adopted thereto. The thus-radiated carrier $CR_v$ (logic "1") or the carrier $CR_h$ (logic "0") is caught at a receiver side, via a radio transmission path (not shown).

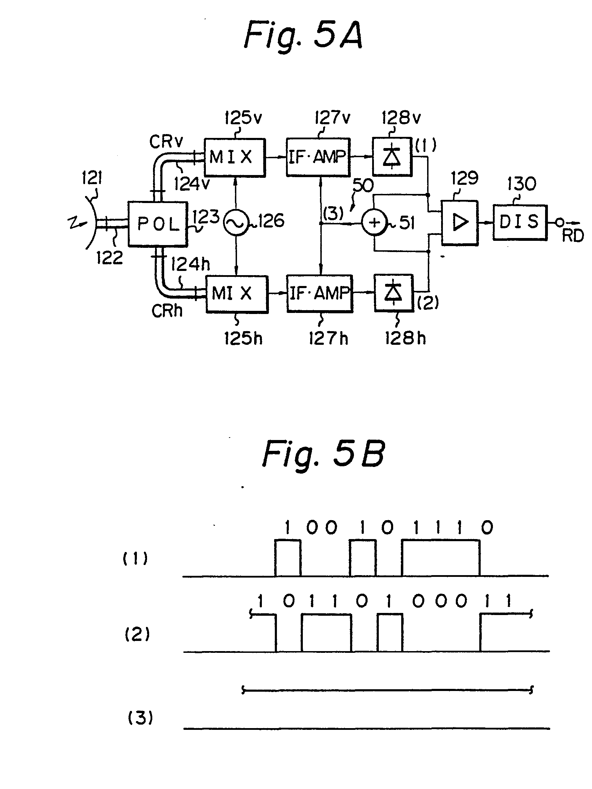

Figure 5A illustrates the constitution of a receiver unit of the radio communication system according to the first embodiment of the present invention. The carriers $CR_v$ and $CR_h$ are first received at a common V/H-polaroid wave antenna 121, then are further transferred, via a waveguide 122, to a polarizer 123. The polarizer 123 provides therefrom the carriers $CR_v$ and $CR_h$ to a mixer (MIX) $125_v$ and a mixer (MIX) $125_h$, via waveguides $124_v$ and $124_h$, respectively. The mixers $125_v$ and $125_h$ receive, on the other hand, local oscillation 126 and thereby convert the carriers $CR_v$ and $CR_h$ into individual intermediate frequency (IF) signals. Then, the IF signals are amplified by individual intermediate frequency amplifiers (IF AMP) $127_v$ and $127_h$ and, thereafter, detected by individual detectors $128_v$ and $128_h$. The thus-detected signals are fed into a differential amplifier 129. The differentially-amplified signal is fed into a discriminator (DIS) 130 for demodulation and reproduction of original data as receiving data RD.

The signals detected by the individual detectors $128_v$ and $128_h$ are also fed to a common AGC circuit 50. This performs a common AGC operation on the signals to produce a common AGC signal, which is then fed back to the IF amplifiers $127_v$ and $127_h$.

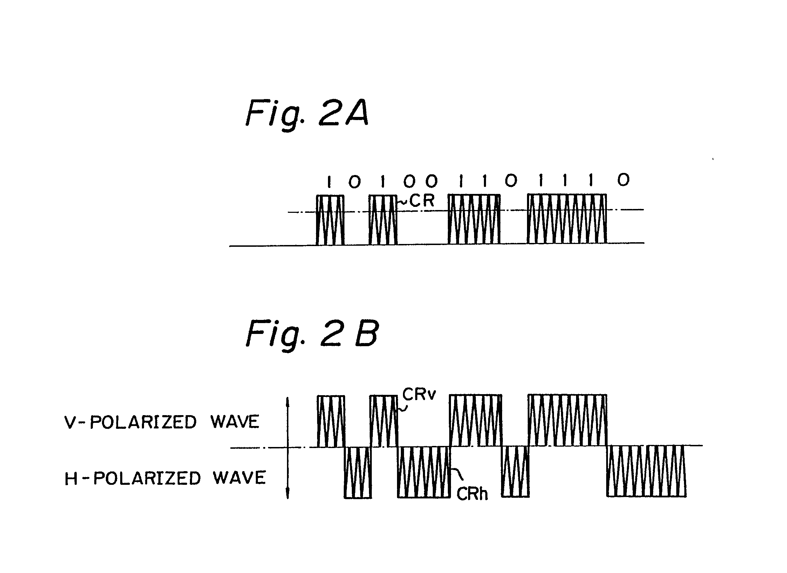

Figure 2A depicts waveforms of an arbitrary receiving signal modulated using a conventional on-off keying type ASK modulation method. Figure 2B depicts waveforms of an arbitrary receiving signal modulated using an on-off keying type ASK modulation method according to the present invention. Both waveforms are depicted taking the data pattern of "10100..." as an example. In Figs. 2A and 2B, the chain dotted line indicates a threshold level for discriminating data "1" and "0" from each other. As apparent from a comparison of the waveforms in Fig. 2A with those of Fig. 2B, the operation margin of the receiving signal with respect to the threshold level for discriminating data "1" and "0" obtained in case of Fig. 2B is much greater than that obtained in the case of Fig. 2A. Therefore, the error rate can be drastically improved. In this case, the errror rate can theoretically be improved by about 3 dB.

Referring to Fig. 2A it is clear that the condition of the receiving signal representing data logic "0" is quite equivalent to the condition of a carrier pause. This makes it difficult to clearly distinguish these two conditions from each other. On the contrary, as apparent from Fig. 2B, the waveforms of the receiving signal according to the present invention allow easy, clear distinguishing of the condition where the receiving signal represents data logic "0", i.e., the existence of the carrier $CR_h$, or the condition where the carrier is paused, i.e., neither the carrier $CR_v$ nor the carrier $CR_h$ exists.

Referring again to Fig. 2A, it is clear that an AGC operation cannot be adapted to the receiving signal of data logic "0", since no carrier exists. Contrary to the above, as clear from Fig. 2B, an AGC operation can continually be performed on the receiving signal, since one of the carriers $CR_v$ and $CR_h$ is always given to the receiver unit.

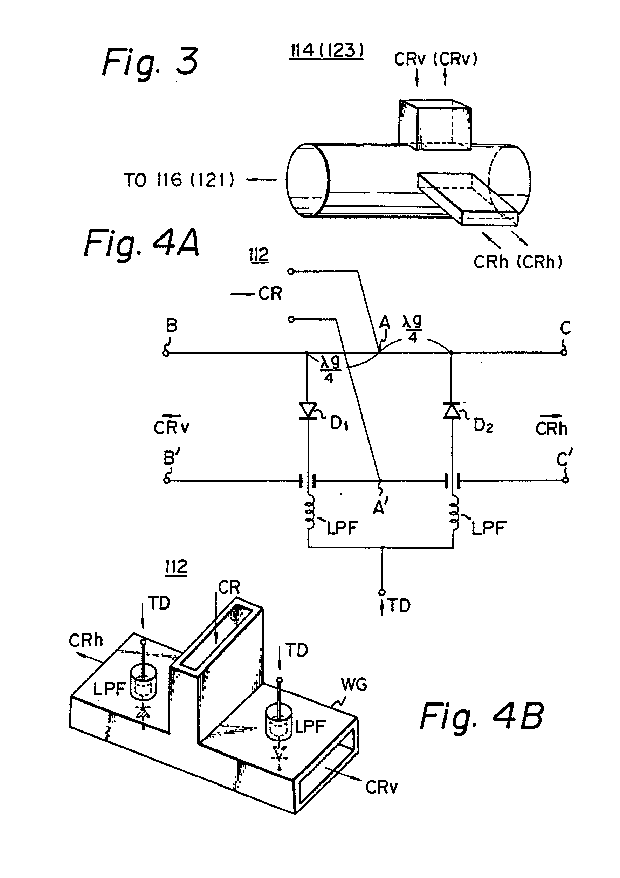

Detailed examples of major members shown in Figs. 1 and 5A will now be given. Figure 3 is a perspective view of an example of a polarizer 114 (123) shown in Fig. 1 (Fig. 5A). In Fig. 3, reference numerals and characters in parentheses represent members for operations in the receiver unit. Incidentally, the circular waveguide shown is short-circuited at its right hand end.

Figure 4A is a circuit diagram of an example of a polarized wave switching selector 112 shown in Fig. 1A. In Fig. 4A, reference characters $D_1$ and $D_2$ represent pin diodes located $\lambda g/4$ apart from points A and A', respectively. The pin diodes $D_1$ and $D_2$ receive the same transmission data TD, but via individual low-pass filters LPF's. Thus, the diodes $D_1$ and $D_2$ are inversely short-circuited and opened, and vice versa, in accordance with the polarity of the transmission data TD. Accordingly, the carrier CR of the oscillator 111 (Fig. 1) is selectively radiated from either an output terminal B—B' or an output terminal C—C' according to the polarity.

Figure 4B is a perspective view for exemplifying a structure of the circuit shown in Fig. 4A. In this example, the waveguide WG is constructed as a so-called T-shaped branch type.

In the radio communication system according to the first embodiment of the present invention as previously mentioned, an AGC operation can be continually achieved for the receiving signal, since one of the carriers $CR_v$ and $CR_h$ is always given to the receiver unit.

The AGC operation will now be further explained in detail. Figure 5A illustrates the constitution of the receiver unit provided with an AGC circuit employed in the system of the present invention. Figure 5B depicts waveforms of major signals appearing in the receiver unit of Fig. 5A. Attention should be paid to the differential amplifier 129 of Fig. 5A which receives both the V- and H-polarized wave signal components. This arrangement can improve the error rate due to the existence of the signal components of the carriers $CR_v$ and $CR_h$, as explained before. Under such a differential amplification mode, it is not advantageous to perform an AGC operation in the V-polarized wave receiving side and the H-polarized wave receiving side independently from each other.

That is, it is advantageous to establish a common AGC operation in the receiver unit. Based on the concept of a common AGC operation, a common AGC circuit 50 is used, as shown in Fig. 5A. In other words, for easy understanding, it can be said that, since the differential amplification method is used, it is advantageous to vary the receiving signal level of one side, for example, the H-polarized wave receiving side, simultaneously with the variation of the receiving signal level of the other side, i.e., the polarized wave side receiving signal level. Therefore, the AGC'ed receiving signal is obtained with a constant peak-to-peak level of the waveforms shown in Fig. 2B.

In order to attain the above-mentioned AGC, the common AGC circuit 50 of Fig. 5A is primarily composed of an adder 51. The adder 51 operates to average the received amplitude level of both the V-polarized wave side and the H-polarized wave side in total. The averaged receiving amplitude level is fed back, as a common AGC signal, to the IF amplifiers $127_v$ and $127_h$, simultaneously. Although Fig. 5A shows the case where the received amplitude levels for the AGC are obtained at the outputs of the detectors $128_v$ and $128_h$, it is also possible to obtain the same at the inputs thereof.

Major signals appearing at portions (1), (2) and (3) around the common AGC circuit 50 of Fig. 5A are respectively depicted in waveforms in rows (1), (2), and (3) of Fig. 5B, using receiving data of a logic pattern "1001 . . ." as an example.

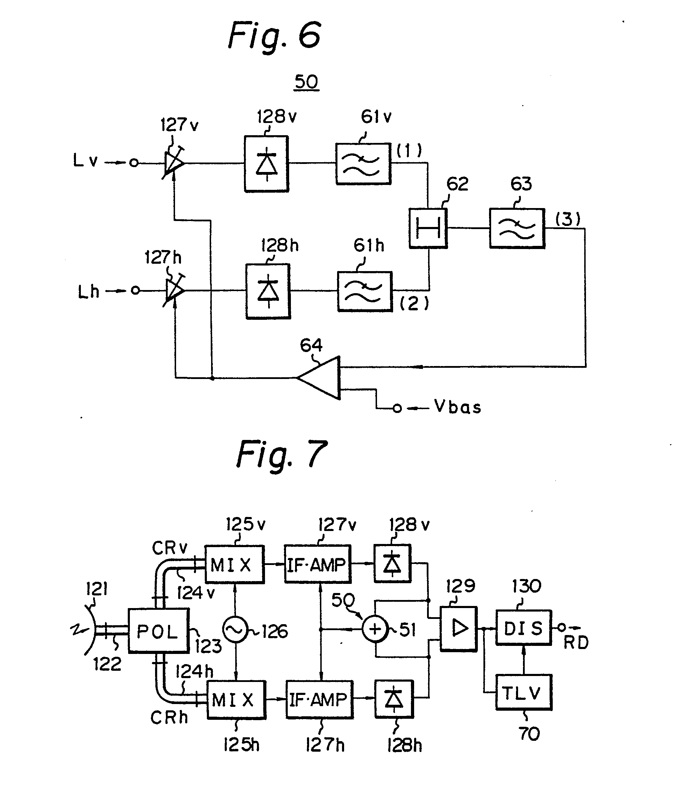

Figure 6 illustrates a detailed example of the common AGC circuit 50 shown in Fig. 5A and its periphery. In Fig. 6, reference numerals $61_v$ $61_h$, and 63 represent low-pass filters, 62 a hybrid circuit, and 64 a comparator. The comparator receives, at its first input, the received amplitude level of both the V- and H-polarized wave side signals, added at the hybrid circuit 62 to each other, and, at its second input, a bias voltage $V_{bas}$ for setting a reference level of the received amplitude level. Therefore, an AGC voltage signal is produced therefrom and fed back to both the IF amplifiers $127_v$ and $127_h$. Here, it will be proven why, as previously mentioned, it is advantageous to establish a common AGC operation in the receiver unit, rather than to perform the AGC operation in the V-polarized wave receiving side and the H-polarized wave receiving side independently. Assuming reference characters $L_A$ and $L_B$, shown in Fig. 6, as input levels for the IF amplifiers $127_v$ and $127_h$ respectively, to attain the AGC, the following equation (1) stands:

$$\sqrt{L_v G_v} + \sqrt{L_h G_h} = k \qquad (1)$$

where the characters $G_v$ and $G_h$ denote the gains of the amplifiers $127_v$ and $127_h$, respectively, and k is a constant. $G_v$ and $G_h$ are determined as equal to each other, i.e., $G_v = G_h$. Therefore, equation (1) can be rewritten as follows:

$$G_v = \frac{k}{\sqrt{L_v}(1+\sqrt{L_h/L_v})} \quad (2)$$

In the case of independent AGC operation for the V- and H-polarized wave receiving sides, equation (3) is established:

$$k = \sqrt{L_v}G \quad (3)$$

where the character G denotes the gain of the amplifier operated under the independent AGC operation.

On the other hand, a noise level $P_n$, at each of portions (1) and (2) shown in Fig. 6, is expressed as

$$P_n = KTBG \quad (4)$$

where the character K denotes Boltzmann's constant, T an absolute temperature, and B a frequency band.

A noise level $P_N$ at a portion (3) in Fig. 6 is expressed as follows:

$$P_N = \frac{P_n}{(1+\sqrt{L_h/L_v})^2} \times 2 \quad (5)$$

Accordingly, the signal-to-noise (S/N ratio, i.e.,

$$\frac{S}{P_N}$$

is given as

$$S/N = \frac{S}{P_n} \times \frac{(1+\sqrt{L_h/L_v})^2}{2} \quad (6)$$

where

$$\frac{S}{P_n}$$

is defined as an S/N ratio exhibited under the independent AGC operation. If $L_h = L_v$ is satisfied, equation (7) is obtained:

$$S/N = \frac{S}{P_n} \times 2 \quad (7)$$

This means that the S/N ratio under the common AGC operation is improved by about 3 dB.

The thus AGC'ed receiving signal is then applied, via the differential amplifier 129, the the discriminator 130, by which the original data is reproduced. In the discriminator 130, if the threshold level (corresponding to the chain dotted line at the centre of Fig. 2B) is fixed, there is the possibility of a larger error rate. This is caused by the fact that the received amplitude levels of both the V- and H-polarized wave sides are not maintained equal to each other at any time. For example, if the signal is received inside a room, the directly received signal or the reflected receiving signal is often drastically reduced in level due to a phase deviation therebetween. This necessarily results in discrimination error of the data "1" and "0". Such discrimination error can be minimized with the use of a particular circuit, explained immediately below.

Figure 7 illustrates the constitution of a modification for improvement of the receiver unit shown in Fig. 5A. The difference here is that a threshold level varying circuit (TLV) 70 is added to the constitution of Fig. 5A.

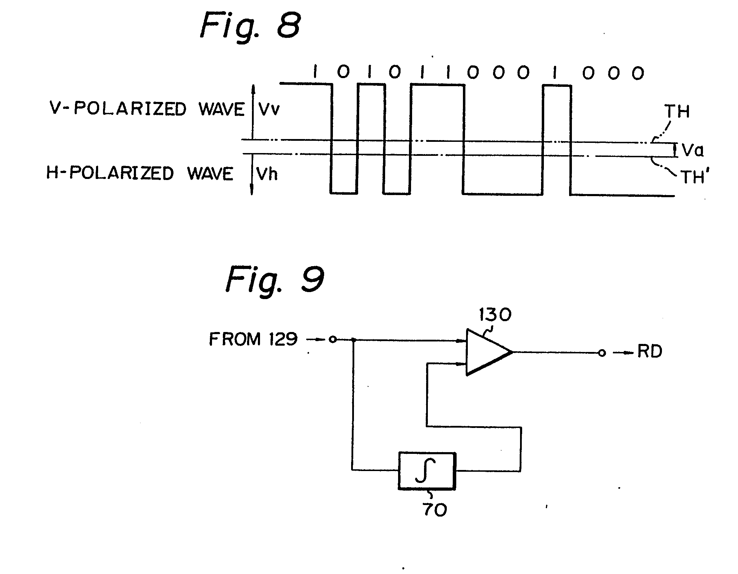

Figure 8 depicts waveforms of the receiving signal for explaining the role of the threshold vevel varying circuit 70 shown in Fig. 7. The waveforms correspond to those of Fig. 2B. In Fig. 8, if the threshold level is fixed at a level indicated by a chain dotted line TH', a discrimination margin for the H-polarized wave side would be lowered when the output of the differential amplifier 129 is produced with an imbalance between the V-polarized wave side level $V_v$ and the H-polarized wave side level $V_n$. For this, a level

$$V_a(=\frac{V_v+V_h}{2})$$

is added to the fixed threshold level TH' so as to obtain a variable threshold level TH. Thereby, an optimum threshold level, i.e., a centre level between peak-to-peak levels of $V_v$ and $V_h$, can always be maintained. This is the role of the circuit 70.

Figure 9 illustrates an example of the discriminator 130 in the threshold level varying circuit 70 shown in Fig. 7. In Fig. 9, the discriminator 130 is constructed in the form of a comparator which receives, at its first input, the output from the differential amplifier 129 and, at its second input, the output from the circuit 70 constructed in the form of an integrator. The integrator includes, first, capacitors to achieve individual sample holding operations for the V- and H-polarized wave side outputs and, second, a smoothing capacitor to produce the mean voltage $V_a$ between the terminal voltages produced by the two sample holding capacitors.

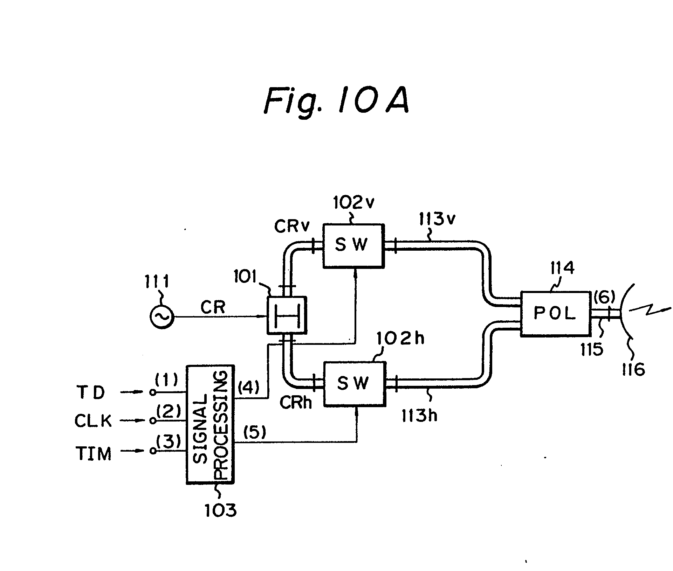

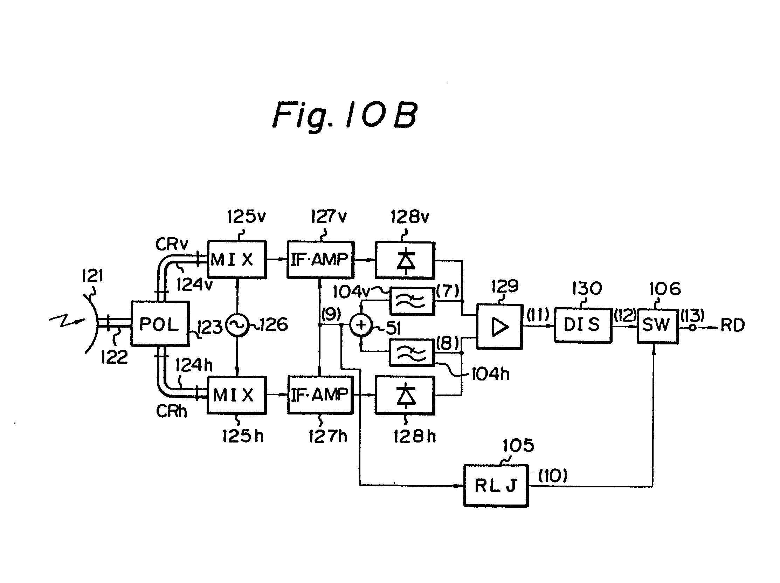

As mentioned previously, the system of the present invention can be adapted to burst-like data transmission too, even though the system is operated under the on-off keying type ASK modulation method. Figure 10A illustrates a constitution of the transmitter unit of the system according to the present invention, in which the burst-like data transmission is performed. Figure 10B illustrates the constitution of the receiver unit to be coupled with the transmitter unit shown in Fig. 10A. Here, "burst-like data transmission" means the equivalent of, for example, the term "TDMA method".

According to the TDMA method, each data transmission commences randomly, i.e., irregularly. Accordingly, the receiver unit (Fig. 10B) must be activated only when the data transmission is given and must not reproduce undesired receiving data other than in the data transmission period. Further, the receiver unit is required to start the AGC as quickly as possible, since as mentioned above, the data transmission commences irregularly. In other words, the receiver unit does not know when the transmission data will be supplied from the transmitter unit. Thus, the initial activation is important in the receiver unit so as to stabilize the AGC very quickly.

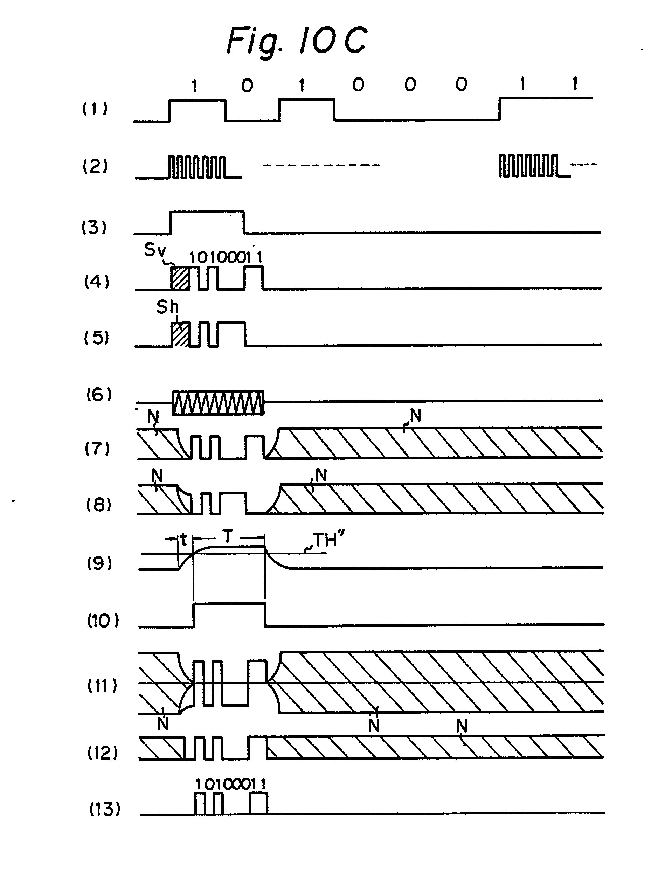

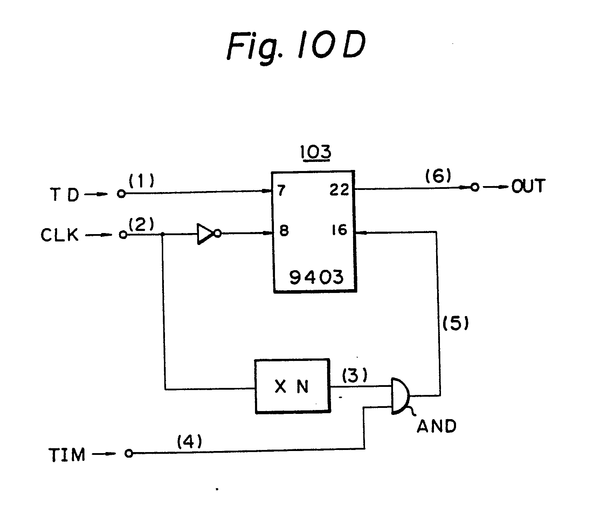

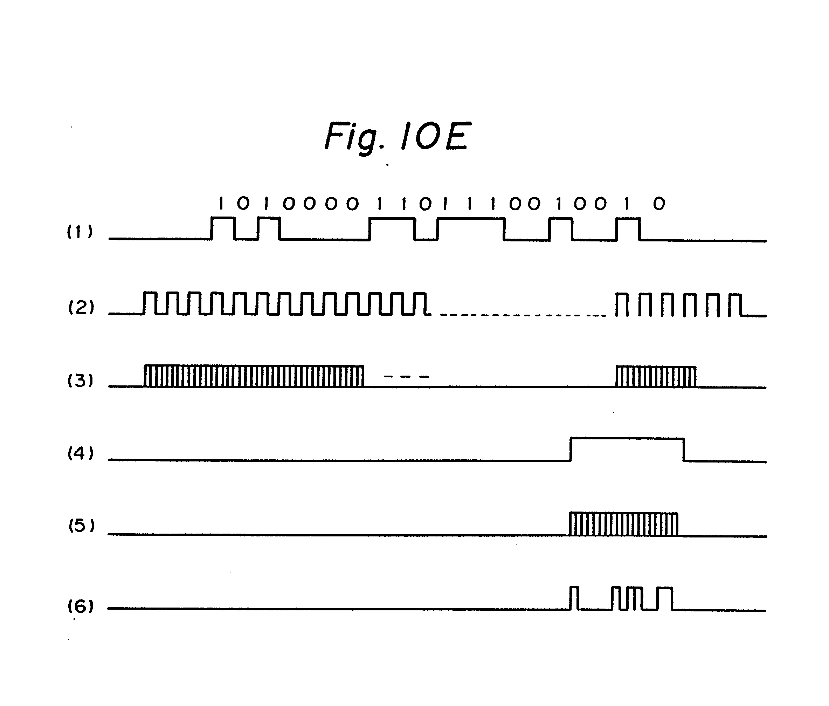

Figure 10 depicts waveforms of major signals appearing in the transmitter unit of Fig. 10A and the receiver unit of Fig. 10B for explaining the operations thereof.

It should be noted that the waveforms of rows (1) through (13) represent signals appearing at respective portions (1) through (13) labelled in Figs. 10A and 10B. Reference numeral 101 in Fig. 10A represents a hybrid circuit for branching the carrier CR evenly into the waveguide sides of $113_v$ and $113_h$. Thus evenly branched carriers $CR_v$ and $CR_h$ are controlled for the data transmission at switches $102_v$ and $102_h$. The switches $102_v$ and $102_h$ are made of, for example, so-called tri-state switches, in which, when the switch $102_v$ assumes three states of on-off-off, the switch $102_h$ assumes three states of off-on-off, respectively. The control operation for assuming these three states can be achieved by means of a known signal processing circuit 103. The circuit 103 receives the transmission data TD (row (1)), a clock signal CLK (row (2)) and a timing signal TIM (row (3)), to be specific, a TDMA timing signal. The circuit 103 is, in other words, a speed conversion circuit and produces, at its outputs, burst signals, as shown in rows (4) and (5). The hatched portions (right to left) of the concerned waveforms, i.e., $S_v$ and $S_h$, are particularly important to note. The hatched portions indicate the lead burst signals $S_v$ and $S_h$, which signals play an important role in the present invention. That is, the lead burst signals are useful in establishing initial activation of AGC at the receiver side.

The switches $102_v$ and $102_h$ are turned on and off in accordance with data logic "1" and "0" so as to allow the carriers $CR_v$ and $CR_h$ to pass therethrough, respectively, to reach the antenna 116 (refer to row (6)). When the data transmission is not performed, the switches $102_v$ and $102_h$ are turned off.

The transmission data enters the receiver unit via the antenna 121. Thereafter, the entered data appear at the outputs of the detectors $128_v$ and $128_h$ with the waveforms shown in rows (7) and (8), respectively. In rows (7) and (8), the hatched portions (left to right) N indicate noise signals.

The outputs (7) and (8) are applied, after elimination of the noise (N) therefrom by the low-pass filters $104_v$ and $104_h$, to the adder 51. The output of the adder 51 has the waveform of row (9). The output (9), i.e. the AGC signal, quickly rises in a time t of row (9) and then exceeds a threshold level TH'' for judging the received amplitude level. In this case, the signal rise in the time t is performed with the use of the lead burst signals $S_v$ and $S_h$. The inherent receiving signal does not become effective until the AGC is established completely. The threshold level TH'' for judging the received amplitude level is held inside a received level judging circuit (RLJ) 105 so as to produce therefrom a resultant output (10) in response to the output (9) from the adder 51. It should be understood that, in Fig. 10C, the pulsewidth of the output (row (10)) is equal to the length of time T in which the AGC signal (row (9)) exceeds the level TH''.

The time T also means the time for receiving the transmission data. Therefore, the output (10) in the time T is applied to an on/off switch (SW) 106 of Fig. 10B. The switch 106 is turned on so long as the output (10) exists, to produce therefrom the necesary receiving data RD. Further, the output (11) from the differential amplifier 129 and the output (12) from the discriminator 130 appears with the waveforms shown in the respective rows (11) and (12). Although the outputs (11) and (12) are provided with undesired noise signals N, the signals N cause no trouble, because they are finally cancelled by the on/off switch 106.

Figure 10d illustrates a more detailed example of the signal processing circuit 103 shown in Fig. 10A. The example corresponds to IC 9403 of Fairchild Industries, Inc. The operation of the circuit 103 will be clarified with reference to Fig. 10E.

Fig. 10E depicts waveforms of major signals appearing in the circuit 103 of Fig. 10D. The waveforms of rows (1) through (6) correspond to signals appearing at portions (1) through (6) shown in Fig. 10D. In Fig. 10D, a block labelled with characters XN operates to multiply the input clock signal CLK by N. The waveform of row (3) is exemplified by a case where the block signal CLK is multiplied by 4 (N=4). The output OUT (6) of Fig. 10D is used, unchanged, for the output (4) in Fig. 10A, while the output OUT (6) is inverted by an inverter (not shown) for the output (5) in Fig. 10A.

Next, a radio communication system according to a second embodiment will be disclosed. The system of the second embodiment is operated using the multilevel amplitude keying type ASK modulation method, instead of the on-off keying type ASK, as in the first embodiment.

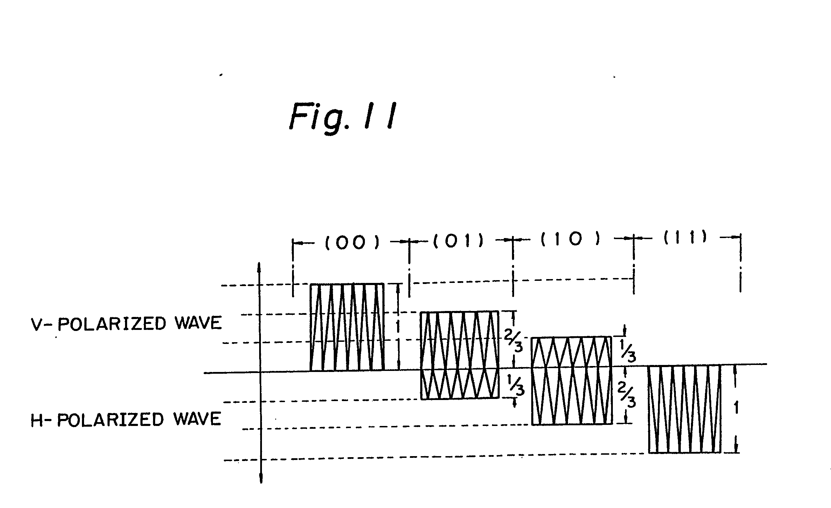

Figure 11 depicts waveforms of the transmission signal for explaining the principle of operation of the radio communication system according to the second embodiment of the present invention. As seen from Fig. 11, the V- and H-polarized waves of the transmission signal have multilevel amplitudes. For example, four modes of such multilevel can be created. Therefore, data patterns of (00), (01), (10), and (11) may be allotted to individual multilevel modes. This means that the data transmission capacity can be increased approximately twice over the data transmission capacity of the first embodiment, as can easily be recognized by comparing the data transmission modes of Figs. 2B and Fig. 11. To achieve this increase, however, it is necessary to partially modify the constitution of the system according to the first embodiment.

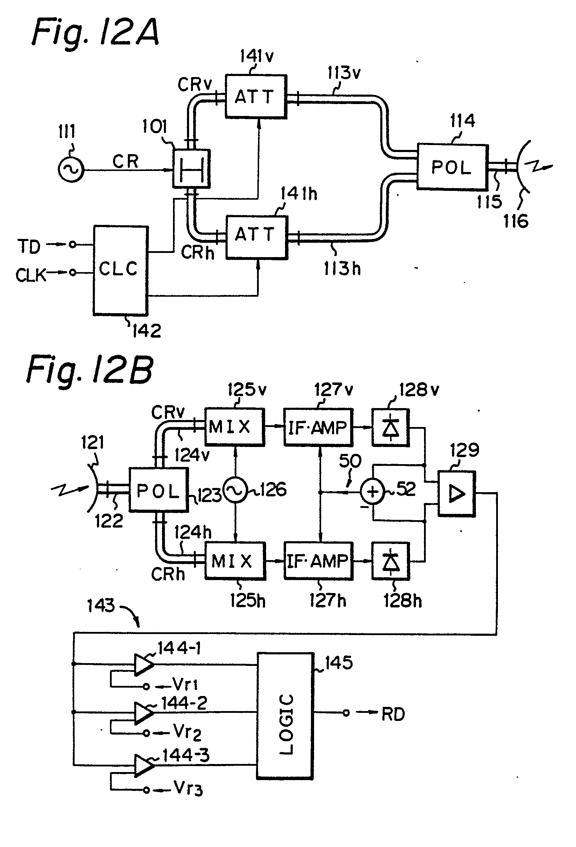

Figure 12A illustrates the constitution of a transmitter unit of the radio communication system according to the second embodiment of the present invention. Reference numerals and characters the same as in previous figures represent the same members (same for later figures). In Fig. 12A, variable attenuators (ATT) $141_v$ and $141_h$ are employed in place of the switches $102_v$ and $102_h$ shown in Fig. 10A. The attenuators $141_v$ and $141_h$ attenuate the individual carriers $CR_v$ and $CR_h$ passing therethrough according to attenuation factors supplied from a carrier level controller (CLC) 142 to create individual multilevel modes, such as shown in Fig. 11.

Figure 12B illustrates the constitution of a receiver unit of a radio communication system according to the second embodiment of the present invention. The constitution of Fig. 12B is similar to that of Fig. 5A. The only differences are that a discriminator 143 and a logic circuit 145 are used, instead of the discriminator 130 shown in Fig. 5A. Also, an adder 52 having an inverting input (−) is used, instead of the adder 51 shown in Fig. 5A. It should be understood that the constitution of Fig. 12B exemplifies the case where the four multilevel modes of Fig. 11 are selectively formed therein.

The differential amplifier 129 of Fig. 12B produces four varieties of outputs in level having $+1$, $+\frac{1}{3}$ ($=\frac{2}{3}-\frac{1}{3}$), $-\frac{1}{3}$ ($=-\frac{2}{3}+\frac{1}{3}$), and $-1$ relative to each other, according to the received amplitude levels of the V- and H-polarized waves relying on the multilevels shown in Fig. 11. These outputs can be distinguished from each other by comparators 144-1, 144-2, and 144-3 which have individual reference voltages $V_{r1}$, $V_{r2}$, and $V_{r3}$. The level of $V_{r1}$ is preset middle between the levels of the above-mentioned $+1$ and $+\frac{1}{3}$. Similarly, $V_{r2}$ is preset between $+\frac{1}{3}$ and $-\frac{1}{3}$ and $V_{r3}$ between $-\frac{1}{3}$ and $-1$. When the comparators 144-1, 144-2, and 144-3 produce the logics "1", "1", and "1", respectively, the logic circuit 145 determines that the receiving data logics are (00). Similarly, if the produced logics are (011), (001), and (000), the receiving data logics are determined by the logic circuit 145 as (01), (10), and (11), respectively. Therefore, the logic circuit 145 can be fabricated with a simple decoding circuit.

Regarding the common AGC circuit 50 of Fig. 12B, it has the adder 52 provided with the inverting input (−) for the H-polarized wave receiving signal. Since the H-polarized wave receiving signal is inverted in polarity, the adder 52 produces a constant level of $+1$ at any multilevel mode of Fig. 11. That is, the added levels are expressed as $(+1-0)$, $\{+\frac{2}{3}-(\frac{1}{3})\}$, $\{+\frac{1}{3}-(-\frac{2}{3})\}$, and $\{(0-(-1)\}$, all resulting in $+1$, in response to the four multilevel modes, respectively.

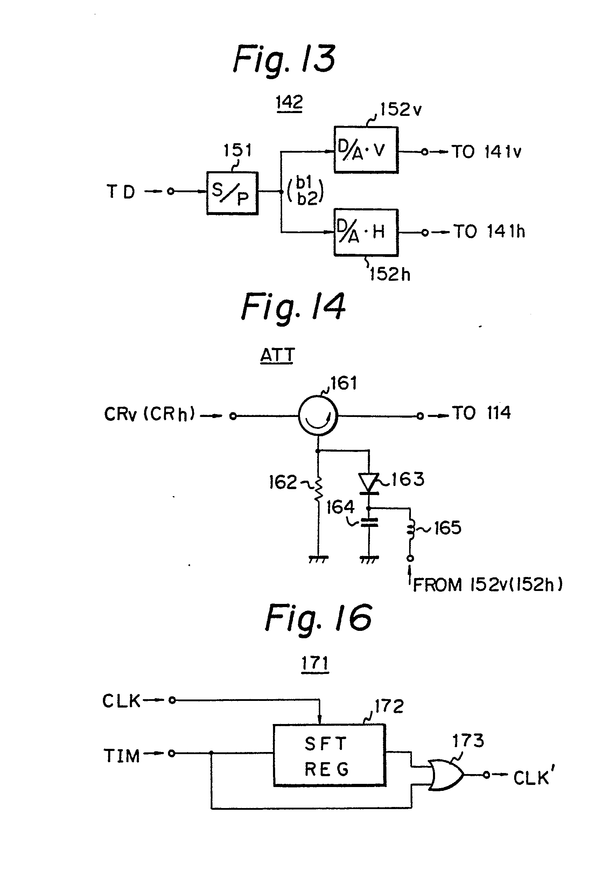

Figure 13 is a circuit diagram of an example of the carrier level controller 142 shown in Fig. 12A. The serial transmission data TD is sequentially input to a serial/parallel converter (S/P) 151 to obtain two parallel bits (b1, b2) which form any one of the data logics (00), (01), (10), and (11) shown in Fig. 11 in accordance with the logic of data TD. Then, the converted parallel logic bits are supplied to both the V-polarized wave side digital/analog converter (D/A V) $152_v$ and H-polarized wave side digital/analog converter (D/A H) $152_h$. The outputs from the D/A converters $152_v$ and $152_h$ are supplied, as attenuation factors, to individual variable attenuators $141_v$ and $141_h$ of Fig. 12A. The converters (D/A V) $152_v$ and (D/A H) $152_h$ are designed so as to produce relative analog levels, i.e., the attenuation factors, recited in the Table A, in response to the data logic bits (b1, b2) of Fig. 11.

Table A

| b1 | 0 | 0 | 1 | 1 |
|---|---|---|---|---|
| b2 | 0 | 1 | 0 | 1 |
| D/A V | 1 | $\frac{2}{3}$ | $\frac{1}{3}$ | 0 |
| D/A H | 0 | $\frac{1}{3}$ | $\frac{2}{3}$ | 1 |

Figure 14 is a circuit diagram of an example of a variable attenuator ATT shown in Fig. 12A. The attenuator ATT is composed of an isolator 161, a resistor 162, a pin diode 163, a capacitor 164, and a coil 165. The resistor 162 works as a termination resistor. In accordance with the variety of analog levels (attenuation factor), the pin diode 163 is rendered in an opened state (1), a shorted state (0), or an intermediate state $(\frac{1}{3}, \frac{2}{3})$ therebetween.

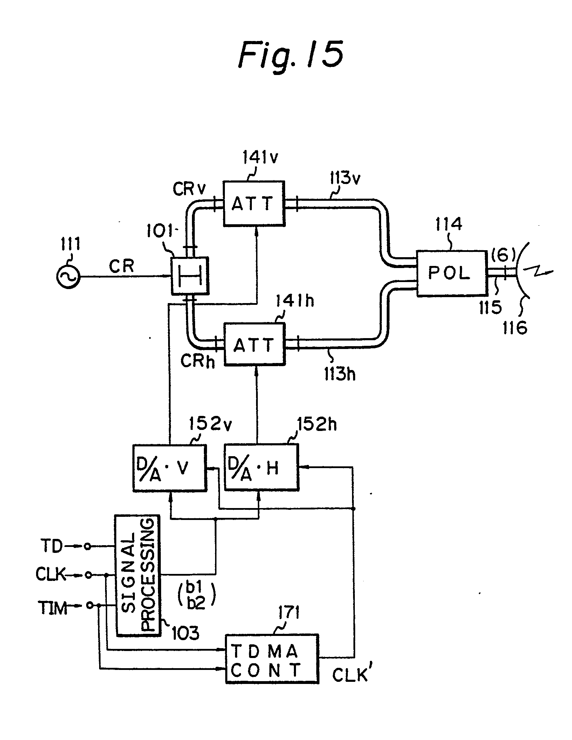

Figure 15 illustrates a modification of a transmitter unit shown in Fig. 10A. The modification is so effected so as to couple the signal processing circuit 103 (Fig. 10A) with a part of the carrier level controller 142 (Fig. 13). The D/A converters $152_v$ and $152_h$ are clocked by a control clock signal CLK' produced from a TDMA controller 171 receiving both the clock signal CLK and the TDMA timing signal TIM.

Figure 16 is a circuit diagram of an example of the TDMA controller 171 shown in Fig. 15. In Fig. 16, the TDMA controller 171 comprises a shift register 172 synchronized with the clock signal CLK and receives the timing signal TIM. The shifted output and the signal TIM itself are OR'ed by an OR gate 173 to produce the control clock signal CLK'. The signal CLK' restricts the duration in which the signal of row (6) in Fig. 10C is to be supplied. In this case, the converters $152_v$ and $152_h$ are so designed as to produce the relative analog level, i.e., the attenuation factors, recited n Table B in response to the data logic bits (b1, b2) and the TDMA timing signal TIM.

Table B

| TIM | 1 | 1 | 1 | 1 | 0 | 0 | 0 | 0 |
|---|---|---|---|---|---|---|---|---|
| b1 | 0 | 0 | 1 | 1 | 0 | 0 | 1 | 1 |
| b2 | 0 | 1 | 1 | 0 | 0 | 1 | 1 | 0 |
| D/A V | 1 | $\frac{2}{3}$ | $\frac{1}{3}$ | 0 | 0 | 0 | 0 | 0 |
| D/A H | 0 | $\frac{1}{3}$ | $\frac{2}{3}$ | 1 | 0 | 0 | 0 | 0 |

In the second embodiment, the threshold level varying circuit 70 is preferably associated with the discriminator 143 (Fig. 12B), as in the first embodiment. That is, the reference voltages $V_{r1}$, $V_{r2}$, and $V_{r3}$ of Fig. 12B are preferably shifted in level along with the variation of the output level of the adder 52 in Fig. 12B.

## Claims

1. A radio communication system operated in an amplitude shift keying (ASK) mode, comprising transmitter apparatus operative to generate a carrier (CR), to transform the carrier into a vertically (V)-polarised wave carrier (CRv) and a horizontally (H)-polarised wave carrier (CRh) and to feed the polarised wave carriers selectively to a transmission path (115, 116, 121, 122) as a transmission signal, in accordance with logic "1" and "0" values of transmission data (TD) to be transmitted, the transmitter operating in the amplitude shift keying (ASK) mode such that the sum of the amplitudes of both the V- and H-polarised wave carriers is substantially constant; and receiver apparatus operative to receive the transmission signal via the transmission path, to separate the transmission signal into the V-polarised wave carrier and the H-polarised wave carrier, as V- and H-polarised wave receiving signals, and to discriminate the amplitude levels of these V- and H-polarised receiving signals so as to reproduce the logic values of the transmission data as received data (RD); cahracterised in that the receiver unit comprises, for dealing with the V-polarised wave receiving signal, a high frequency amplifier (127v), and a detector (128v) to generate a V-polarised wave detected signal; and for dealing with the H-polarised wave receiving signal, a high frequency amplifier (127h), and a detector (128h) to generate a H-polarised wave detected signal; in that both of the V- and H-polarised wave high frequency amplifiers (127v, 127h) are gain controlled by means of a common automatic gain control (AGC) circuit (50) comprising an adder (51) to receive both of the V- and H-polarised wave detected signals, to add them absolutely in amplitude, and to feed back the thus-added output to both of the V- and H-polarised wave high frequency amplifiers (127v, 127h) simultaneously, a differential amplifier (129) to receive both said detected signals, and a discriminator (130) to receive the output from the differential amplifier and to produce the received data (RD).

2. A system as claimed in claim 1, characterised in that the adder (50) comprises a V-polarised wave side low-pass filter (61v) for receiving the output from the V-polarised wave side detector (128v), an H-polarised wave side low-pass filter (61h) for receiving the output from the H-polarised wave side detector (128h), a hybrid circuit (62), for adding the outputs from the V- and H-polarised wave side low-pass filters, a low-pass filter connected to the hybrid circuit, and a comparator (64) for receiving the output from this low-pass filter at a first input and a reference bias voltage at a second input and for producing a resultant output to feed back to both V- and H-polarised wave high frequency amplifiers (127v, 127h).

3. A system as claimed in any preceding claim, wherein each high frequency amplifier comprises an intermediate amplifier associated with a respective mixer (125v, 125h), the system further comprising a local oscillator (126) to supply a local oscillation signal commonly to both of the mixers to produce individual intermediate frequency signals.

4. A system as claimed in any preceding claim characterised in that the discriminator (130) holds therein a threshold level voltage for discriminating logic "1" and logic "0" from each other in the output from the differential amplifier (129).

5. A system as claimed in claim 4, characterised in that the threshold level voltage is varied by means of a threshold level varying circuit (70) along with variation in level of the output from the differential amplifier (129).

6. A system as claimed in claim 5, characterised in that the threshold level varying circuit (70) comprises an integrator which includes capacitors to achieve individual sample holding operations for the V- and H-polarised wave side outputs, and a smoothing capacitor to produce a mean voltage ($V_a$) between the terminal voltages produced by the sample holding capacitors.

7. A system as claimed in any preceding claim, wherein the transmitter unit transmits burst-like transmission data, i.e. transmits the transmission signal randomly, characterised in that a lead burst signal (Sv, Sh) is added to the head of the transmission signal in the transmitter unit; and in that in the receiver unit, the AGC operation is initially activated quickly with the use of the lead burst signal.

8. A system as claimed in any preceding claim, wherein the system is to be operated in an on-off keying type ASK modulation mode, characterised in that in the transmitter unit, the V-polarised wave carrier (CRv) and the H-polarised wave carrier (CRh) are selectively produced in accordance with logic "1" and logic "0" of the transmission data (TD); and in that, in the receiver unit, the logic "1" and logic "0" of the received data (RD) are discriminated according to existence or nonexistence of the V- and H-polarised wave detected signals.

9. A system as claimed in claim 8, characterised in that the transmitter unit includes switching means (112) for receiving the carrier (CR) and producing one or other of the V- and H-polarised wave carriers (CRv, CRh) in accordance with the logic levels "1" and "0" of the transmission data (TD).

10. A system as claimed in claim 9, characterised in that the switching means (112) comprises a polarised wave switching selector controlled by the logic of the transmission data (TD).

11. A system as claimed in claim 9, characterised in that the switching means comprises a V-polarised wave side switch (102v) and an H-polarised wave side switch (102h) installed independently of each other.

12. A system as claimed in any one of claims 1—7, characterised in that the system is operated in a multilevel keying type ASK modulation mode, characterised in that in the transmitter unit both the V-polarised wave carrier (CRv), with any one of a number of predetermined multilevel amplitudes, and the H-polarised wave carrier (CRh), with any one of a number of predetermined multilevel amplitudes, are selectively produced in accordance with a variety of logic sets for composing the transmission data (TD); and in that in the receiver unit each said logic set is discriminated according to a variety of combinations of the multilevel amplitudes of the V- and H-polarised wave detected signals.

13. A system as claimed in claim 12, characterised in that the transmitter unit includes carrier level carrying means (141v, 141h) for receiving the carrier (CR) and producing the V- and H-polarised wave carriers having individual amplitude levels in accordance with each said logic set of the transmission data (TD).

14. A system as claimed in claim 13, characterised in that the carrier level varying means comprises a V-polarised wave side variable attenuator (141v) and an H-polarised wave side variable attenuator (141h) for attenuating the individual V- and H-polarised wave carriers.

15. A system as claimed in claim 14, characterised in that the V- and H-polarised wave side variable attenuators (141v, 141h) are controlled by individual attenuation factors from a carrier level controller (142) which receives the transmission data (TD).

16. A system as claimed in claim 15, characterised in that the carrier level controller (142) comprises a serial/parallel converter (151) for converting serial bits of the transmission data (TD) sequentially into parallel bits (b1, b2) to produce each logic set, and a V-polarised wave side digital/analog converter (152v) and an H-polarised wave side digital/analog converter (152h) to produce analog level signals as the individual attenuation factors.

17. A system as claimed in claim 12, characterised in that the discriminator (143) holds therein a plurality of reference voltages (Vr1—Vr3) for discriminating each logic set of the output from the differential amplifier (129).

18. A system as claimed in claim 17, characterised in that the discriminator (143) comprises a plurality of comparators (144-1 to 144-3) each of which receives at a first input, the output from the differential amplifier (129), and individually, at second inputs, the reference voltages (Vr1—Vr3); and in that the discriminator includes a logic circuit (145) which receives outputs from the plurality of comparators and determines a corresponding logic set for creating the received data (RD).

19. A system as claimed in claim 18, characterised in that the logic circuit (145) comprises a decoder.

20. A system as claimed in claim 19, characterised in that the reference voltages are varied by means of a threshold level varying circuit (70) along with variation in level of the output from the differential amplifier (129).

21. A system as claimed in claim 20, wherein the threshold level varying circuit (70) comprises an integrator which includes capacitors to achieve individual sample holding operations for the V- and H-polarised wave side outputs and a smoothing capacitor to produce a mean voltage $V_a$ between the terminal voltages produced by the sample holding capacitors.

**Patentansprüche**

1. Radiokommunikationssystem, das in einem Amplitudenverschiebungstastungs - (ASK) - Modus betrieben wird, mit einer Transmissionsvorrichtung, die betreibbar ist, um einen Träger (CR) zu erzeugen, um den Träger in eine vertikal (V)-polarisierte Trägerwelle (CRv) und eine horizontal (H)-polarisierte Trägerwelle (CRh) zu transformieren und die polarisierten Trägerwellen als ein Transmissionssignal selektiv in einen Transmissionsweg (115, 116, 121, 122) einzuspeisen, in Übereinstimmung mit logischen "1"- und "0"-Werten von Transmissionsdaten (TD), die übertragen werden sollen, wobei der Sender in dem Amplitudenverschiebungstastungs - (ASK) - Modus so arbeitet, daß die Summe der Amplituden der V- und H-polarisierten Trägerwellen im wesentlichen konstant ist; und eine Empfängervorrichtung, die betreibbar ist, um das Transmissionssignal über den Transmissionsweg zu empfangen, um das Transmissionssignal in die V-polarisierte Trägerwelle und die H-polarisierte Trägerwelle zu trennen, als V- und H-polarisierte Wellenempfangssignale, und um die Amplitudenpegel dieser V- und H-polarisierten Empfangssignale zu unterscheiden, um so die logischen Werte der Transmissionsdaten als empfangene Daten (RD) zu reproduzieren; dadurch gekennzeichnet, daß die Empfängereinheit umfaßt, einen Hochfrequenzverstärker (127v) und einen Detektor (128v), zur Handhabung des V-polarisierten Empfangswellensignals, um ein V-polarisiertes Empfangswellensignal zu erzeugen; einen Hochfrequenzverstärker (127h) und einen Detektor (128h), und zur Handhabung des H-polarisierten Empfangswellensignals, um ein H-polarisiertes Detektionswellensignal zu erzeugen; daß beide Hochfrequenzverstärker (127v, 127h) für die V-polarisierte und die H-polarisierte Welle verstärkungsgesteuert sind, mittels einer gemeinsamen automatischen Verstärkungssteuerschaltung (AGC) (50), die einen Addierer (51) umfaßt, um sowohl die V-polarisierten als auch die H-polarisierten detektierten Wellensignale zu empfangen, um sie in der Amplitude absolut zu addieren, und um die so addierten Ausgänge gleichzeitig beiden Hochfrequenzverstärken (127v, 127h) für die V-polarisierte Welle und für die H-polarisierte Welle zuzuführen, und einen Differenzverstärker (129), um beide genannten detektierten Signale zu empfangen, und einen Diskriminator (130), um den Ausgang von dem Differenzverstärker zu empfangen und die empfangenen Daten (RD) zu erzeugen.

2. System nach Anspruch 1, dadurch gekennzeichnet, daß der Addierer (50) auf der Seite der einen V-polarisierten Welle einen Tiefpaßfilter (61v) zum Empfang des Ausgangs von dem Detektor (128v) auf der Seite der V-polarisierten Welle umfaßt, auf der Seite der H-polarisierten Welle einen Tiefpaßfilter (61h) zum Empfang des Ausgangs von dem Detektor (128h) auf der Seite der H-polarisierten Welle, eine Hybridschaltung (62), zum Addieren der Ausgänge von den Tiefpaßfiltern der V- und H-polarisierten Wellen, wobei der Tiefpaßfilter mit der Hybridschaltung verbunden ist, und einen Komparator (64) zum Empfang des Ausgangs von diesem Tiefpaßfilter bei einem ersten Eingang und einer Referenzvorspannung bei einem zweiten Eingang und zum Erzeugen eines resultierenden Ausgangs zur Rückführung zu den Hochfrequenzverstärkern (127v, 127h) sowohl der V- als auch der H-polarisierten Wellen.

3. Verfahren nach einem der vorhergehenden Ansprüche, bei dem jeder Hochfrequenzverstärker einen Zwischenverstärker umfaßt, der einem jeweiligen Mischer (125v, 125h) zugeordnet ist, welches System ferner einen lokalen Oszillator (126) umfaßt, um ein lokales Oszillationssignal gemeinsam beiden Mischern zuzuführen, um individuelle Zwischenfrequenzsignale zu erzeugen.

4. System nach einem der vorhergehenden Ansprüche, dadurch gekennzeichnet, daß der Diskriminator (130) eine Schwellenwertpegelspannung enthält, zum Diskriminieren der logischen "1" und der logischen "0" voneinander in dem Ausgang des Differentialverstärkers (129).

5. System nach Anspruch 4, dadurch gekennzeichnet, daß die Schwellenwertspannung mittels einer Schwellenwertpegel-Veränderungsschaltung (70) verändert wird, zusammen mit einer Veränderung des Pegels des Ausgangs des Differentialverstärkers (129).

6. System nach Anspruch 5, dadurch gekennzeichnet, daß die Schwellenwertpegel-Veränderungsschaltung (70) einen Integrator umfaßt, welcher Kondensatoren enthält, um individuelle Probenhalteoperationen zu erzielen, für die Ausgänge der Seiten der V- und H-polarisierten Wellen, und einen Glättungskondensator, um eine mittlere Spannung $V_a$ zwischen den Anschlußspannungen zu erzeugen, die durch die Probenhaltekondensatoren erzeugt werden.

7. System nach einem der vorhergehenden Ansprüche, bei dem die Transmissionseinheit burstartige Transmissionsdaten sendet, d.h., daß das Transmissionssignal wahlfrei sendet, dadurch gekennzeichnet, daß ein Anfangsburst-Signal (Sv, Sh) zu dem Kopf des Transmissionssignals in der Transmissionseinheit addiert wird; und daß in der Empfängereinheit der AGC-Betrieb anfänglich schnell mit Hilfe des Führungsburstsignals aktiviert wird.

8. System nach einem der vorhergehenden Ansprüche, bei dem das System in einem Ein-Aus-Tastungstyp - ASK - Modulationsmodus betrieben werden soll, dadurch gekennzeichnet, daß in der Transmissionseinheit die V-polarisierte Trägerwelle (CRv) und die H-polarisierte Trägerwelle (CRh) selektiv in Übereinstimmung mit einer logischen "1" und logischen "0" der Transmissionsdaten (TD) erzeugt werden; und daß in der Empfängereinheit die logische "1" und logische "0" der empfangenen Daten (RD) in Übereinstimmung mit der Existenz oder der Nichtexistenz der V- und H-polarisierten detektierten Wellensignale unterschieden werden.

9. System nach Anspruch 8, dadurch gekennzeichnet, daß die Transmissionseinheit Schalteinrichtungen (112) umfaßt, zum Empfang des Trägers (CR) und Erzeugen einer der V- und H-polarisierten Trägerwellen (CRv, CRh), in Übereinstimmung mit den Logikwerten "1" und "0" der Transmissionsdaten (TD).

10. System nach Anspruch 9, dadurch gekennzeichnet, daß die Schalteinrichtung (12) einen Schaltselektor für polarisierte Wellen umfaßt, der durch die Logik der Transmissionsdaten (TD) gesteuert wird.

11. System nach Anspruch 9, dadurch gekennzeichnet, daß die Schalteinrichtung einen Schalter (102v) auf der Seite der V-polarisierten Wellen und einen Schalter (102h) auf der Seite der H-polarisierten Wellen umfaßt, die voneinander unabhängig installiert sind.

12. System nach einem der Ansprüche 1 bis 7, dadurch gekennzeichnet, daß das System in einem Mehrfachpegeltastungstyp - ASK - Modulationsmodus betrieben wird, dadurch gekennzeichnet, daß in der Transmissionseinheit sowohl die V-polarisierte Trägerwelle (CRv) mit irgendeiner einer Anzahl von vorbestimmten Mehrfachpegelamplituden, und die H-polarisierte Trägerwelle (CRh), mit irgendeiner einer Anzahl von vorbestimmten Mehrfachpegelamplituden, selektiv erzeugt werden, in Übereinstimmung mit unterschiedlichen logischen Sätzen zum Zusammensetzen der Transmissionsdaten (TD); und daß in der Empfängereinheit jeder genannte logische Satz in Übereinstimmung mit unterschiedlichen Kombinationen der Mehrfachpegelamplituden der V- und H-polarisierten empfangenen Wellensignale diskriminiert werden.

13. System nach Anspruch 12, dadurch gekennzeichnet, daß die Transmissionseinheit Trägerpegel-Variierungseinrichtungen (141v, 141h) umfaßt, zum Empfang der Träger (CR) und zum Erzeugen von V- und H-polarisierten Trägerwellen, die individuelle Amplitudenpegel in Übereinstimmung mit jedem genannten logischen Satz der Transmissionsdaten (TD) aufweisen.

14. System nach Anspruch 13, dadurch gekennzeichnet, daß die Trägerpegel - Variierungseinrichtung einen variablen V-polarisierten Wellenseiten-Dämpfer (141v) und einen variablen H-Polarisationswellenseiten-Dämpfer (141h) zum Dämpfen der V- und H-polarisierten Trägerwellen aufweist.

15. System nach Anspruch 14, dadurch gekennzeichnet, daß die variablen Dämpfer (141v, 141h) auf der Seite der V- und auf der Seite der H-polarisierten Wellen durch individuelle Dämpfungsfaktoren von dem Trägerpegelcontroller (142), der die Transmissionsdaten (TD) empfängt, gesteuert werden.

16. System nach Anspruch 15, dadurch gekennzeichnet, daß der Trägerpegelcontroller (142) einen seriell/parallel-Konverter (151) zum Konvertieren serieller Bits der Transmissionsdaten (TD) sequentiell in parallele Bits (b1, b2) umfaßt, um jeden logischen Satz zu erzeugen, und einen digital/analog-Konverter (152v) auf der Seite der V-polarisierten Wellen und einen digital/analog-Konverter (152h) auf der Seite der H-polarisierten Wellen zur Erzeugung analoger Pegelsignale als individuelle Dämpfungsfaktoren.

17. System nach Anspruch 12, dadurch gekennzeichnet, daß der Diskriminator (143) eine Vielzahl von Referenzspannungen (Vr1—Vr3) zum Diskriminieren jedes logischen Satzes des Ausgangs von dem Differenzverstärker (129) umfaßt.

18. System nach Anspruch 17, dadurch gekennzeichnet, daß der Diskriminator (143) eine Vielzahl von Komparatoren (144-1 bis 144-3) umfaßt, welche jeweils an einem ersten Eingang den Ausgang des Differenzverstärkers (129) und individuell, an zweiten Eingängen, die Referenzspannung (Vr1—Vr3) empfangen; und daß der Diskriminator eine logische Schaltung (145) enthält, die Ausgänge von einer Vielzahl von Komparatoren empfängt und einen entsprechenden logischen Satz zum Erzeugen der Empfangsdaten (RD) bestimmt.

19. System nach Anspruch 18, dadurch gekennzeichnet, daß die Logikschaltung (145) einen Decoder umfaßt.

20. System nach Anspruch 19, dadurch gekennzeichnet, daß die Referenzspannungen mittels einer Schwellenwertpegel-Variierungsschaltung (70) variiert werden, zusammen mit der Variation des Pegels des Ausgangs von dem Differentialverstärker (129).

21. System nach Anspruch 20, bei dem die Schwellenwertpegelvariierungsschaltung (70) einen Integrator umfaßt, der Kondensatoren enthält, zur Erzielung individueller Probenhalteoperationen für die Ausgänge auf den Seiten der V- und H-polarisierten Wellen, und einen Glättungskondensator, um eine mittlere Spannung $V_a$ zwischen den Anschlußspannungen zu erzeugen, die von den Probenhaltekondensatoren erzeugt werden.

**Revendications**

1. Système de communication radioélectrique fonctionnant dans un mode (ASK) de manipulation par décalage d'amplitude, comportant un appareil émetteur ayant pour fonction de produire une porteuse (CR), de transformer la porteuse en une porteuse d'onde de polarisation verticale V et une porteuse d'ond de polarisation horizontale H et d'appliquer les porteuses d'ondes polarisées sélectivement à un circuit de transmission (115, 116, 121, 122) comme un signal d'émission en fonction des valeurs logiques "1" et "0" données d'émission (TD) à émettre, l'émetteur fonctionnant dans le mode (ASK) de manipulation par déplacement d'amplitude de manière que la somme des amplitudes des deux porteuses d'ondes de polarisation V et H soit pratiquement constante; et un appareil récepteur ayant pour fonction de recevoir le signal d'émussion par l'intermédiaire du circuit de transmission, de séparer le signal d'émission en la porteuse d'onde de polarisation V et la porteuse d'onde de polarisation H, comme des signaux de réception d'ondes de polarisation V et H et de discriminer les niveaux d'amplitude de ces signaux de réception de polarisation V et H de manière à reproduire les valeurs logiques des données d'émission comme des données reçues (RD); caractérisé en ce que l'unité de récepteur comporte, pour traiter le signal de réception d'onde de polarisation V, en amplificateur à haute fréquence (127v) et un détecteur (128v) pour produire un signal détecte d'onde de polarisation V, et, pour traiter le signal de réception d'onde de polarisation H, un amplificateur à haute fréquence (127h) et un détecteur (128h) pour produire un signal détecté d'onde de polarisation H; en ce que les deux amplificateurs à haute fréquence d'ondes de polarisation V et H (127v, 127h) sont commandés en gain au moyen d'un circuit (AGC) de commande automatique de gain commun (50) comportant un additionneur (51) qui reçoit les signaux détectés d'ondes de polarisation V et H, qui en additionne les amplitudes absolues et qui ramène la sortie ainsi additionnée aux deux amplificateurs à haute fréquence d'ondes de polarisation V et H (127v, 127h) simultanément, un amplificateur differentiel (129) qui reçoit les deux signaux détectés et un discriminateur (130) qui reçoit la sortie de l'amplificateur différentiel et qui produit les données reçues (RD).

2. Système selon la revendication 1, caractérisé en ce que l'additionneur (50) comporte un filtre passe-bas (61v) du côté d'onde de polarisation V pour recevoir la sortie du détecteur (128v) du côté d'onde de polarisation V, un filtre passe-bas (61h) du côté d'onde de polarisation H pour recevoir la sortie du détecteur (128h) du côté d'onde de polarisation H, un circuit hybride (62) qui additionne les sorties des filtres passe-bas des côtés d'ondes de polarisation V et H, un filtre passe-bas connecté au circuit hybride et un comparateur (64) qui reçoit la sortie de ce filtre passe-bas à une première entrée et une tension de polarisation de référence à une seconde entrée et qui produit une sortie résultante pour la ramener aux deux amplificateurs à haute fréquence (127v, 127h) d'ondes de polarisation V et H.

3. Système selon l'une quelconque des revendications précédentes, dans lequel chaque amplificateur à haute fréquence comporte un amplificateur intermédiaire associé avec un mélangeur respectif (125v, 125h), le système comportant en outre un oscillateur local (126) pour fournir un signal d'oscillation local en commun aux deux mélangeurs afin de produire des signaux individuels de fréquences intermédiaires.

4. Système selon l'une quelconque des revendications précédentes, caractérisé en ce que le discriminateur (130) conserve une tension de niveau seuil pour discriminer un niveau logique "1" et un niveau logique "0" l'un de l'autre à la sortie de l'amplificateur différentiel (129).

5. Système selon la revendication 4, caractérisé en ce que la tension de niveau seuil est modifiée un fonction d'un circuit (70) de variation de niveau seuil avec les variations de niveau de la sortie de l'amplificateur différentiel (129).

6. Système selon la revendication 5, caractérisé en ce que le circuit (70) de variation de niveau seuil comporte un intégrateur qui comprend des condensateurs pour effectuer les opérations individuelles de maintien d'échantillons pour les sorties des côtés d'ondes de polarisation V et H et un condensateur de filtrage qui produit une tension moyenne ($V_a$) entre les tensions aux bornes produites par les condensateurs de maintien d'échantillons.

7. Système selon l'une quelconque des revendications précédentes, dans lequel l'unité d'émetteur émet des données d'émission en forme de train, c'est à dire émet le signal d'émission de façon aléatoire, caractérisé en ce que le signal de train avant (Sv, Sh) est additionné au début du signal d'émission dans l'unité d'émetteur; et en ce que, dans l'unité de récepteur, l'opération AGC est activée rapidement et initialement avec l'utilisation du signal de train avant.

8. Système selon l'une quelconque des revendications précédentes, dans lequel le système doit fonctionner dans le mode de modulation ASK du type à manipulation par tout-ou-rien, caractérisé en ce que, dans l'unité d'émetteur, la porteuse d'onde de polarisation V (CRv) et la porteuse d'onde de polarisation H (CRh) sont produites sélectivement en fonction du niveau logique "1" et de niveau logique "0" des données d'émission (TD); et en ce que, dans l'unité de récepteur, le niveau logique "1" et le niveau logique "0" des données reçues (RD) sont discriminés en fonction de l'existence ou de l'absence des signaux détectés d'ondes de polarisation V et H.

9. Système selon la revendication 8, caractérisé en ce que l'unité d'émetteur comporte un dispositif de commutation (112) qui reçoit la porteuse (CR) et qui produit l'une ou l'autre des porteuses d'ondes de polarisation V et H (CRv, CRh) en fonction des niveaux logiques "1" et "0" des données d'émission (TD).

10. Système selon la revendication 9, caractérisé en ce que le dispositif de commutation (112) comporte un sélecteur de commutation d'ondes polarisées commandé par le niveau logique des données d'émission (TD).

11. Système selon la revendication 9, caractérisé en ce que le dispositif de commutation comporte un commutateur (102v) de côté d'onde de polarisation V et un commutateur (102h) de côté d'onde de polarisation H installés indépendamment l'un de l'autre.

12. Système selon l'une quelconque des revendications 1 à 7, caractérisé en ce que le système fonctionne dans un mode de modulation ASK du type à manipulation par niveaux multiples, caractérisé en ce que, dans l'unité d'émetteur, la porteuse d'onde de polarisation V (CRv) avec l'une quelconque d'un certain nombre d'amplitudes prédéterminées de niveaux multiples, et la porteuse d'onde de polarisation H (CRh) avec l'une quelconque d'un certain nombre d'amplitudes prédéterminées de niveaux multiples, sont produites sélectivement en fonction d'une variété de groupes logiques pour composer les données d'émission (TD); et en ce que, dans l'unité de récepteur, chaque ensemble logique est discriminé en fonction d'une variété de combinaisons des amplitudes de niveaux multiples des signaux détectés d'ondes de polarisation V et H.

13. Système selon la revendication 12, caractérisé en ce que l'unité d'émetteur comporte un dispositif de variation de niveau de porteuse (141v, 141h) qui reçoit la porteuse (CR) et qui produit des porteuses d'ondes de polarisation V et H ayant des niveaux d'amplitudes individuelles en fonction de chacun desdits ensembles logiques des données d'émission (TD).

14. Système selon la revendication 13, caractérisé en ce que le dispositif de variation de niveau de porteuse comporte un atténuateur variable (141v) de côté d'onde de polarisation V et un atténuateur variable (141h) de côté d'onde de polarisation H pour atténuer les porteuses d'ondes de polarisation V et H individuelles.

15. Système selon la revendication 14, caractérisé en ce que les atténuateurs variables (141v, 141h) des côtés d'ondes de polarisation V et H sont commandés par des facteurs individuels d'atténuation provenant d'un moniteur de niveau de porteuse (142) qui reçoit les données d'émission (TD).

16. Système selon la revendication 15, caractérisé en ce que le moniteur de niveau de porteuse (142) comporte un convertisseur série/parallèle (151) pour convertir des bits en série des données d'émission (TD), séquentiellement en des bits en parallèle (b1, b2) afin de produire chaque ensemble logique et un convertisseur numérique-analogique (152v) de côté d'onde de polarisation V et un convertisseur numérique-analogique (152h) de côté d'onde de polarisation H pour produire des signaux de niveau analogique comme les facteurs individuels d'atténuation.

17. Système selon la revendication 12, caractérisé en ce que le discriminateur (143) conserve plusieurs tensions de référence (Vr1—Vr3) pour discriminer chaque ensemble logique de la sortie de l'amplificateur différentiel (129).

18. Système selon la revendication 17, caractérisé en ce que le discriminateur (143) comporte plusieurs comparateurs (144-1 à 144-3) dont chacun reçoit à une première entrée, la sortie de l'amplificateur différentiel (129), et, individuellement aux secondes sorties, les tensions de référence (Vr1—Vr3); et en ce que le discriminateur comporte un circuit logique (145) qui reçoit des sorties des plusieurs comparateurs et qui détermine un ensemble logique correspondant pour créer les données reçues (RD).

19. Système selon la revendication 18, caractérisé en ce que le circuit logique (145) consiste en un décodeur.

20. Système selon la revendication 19, caractérisé en ce que les tensions de référence sont modifiées au moyen d'un circuit (70) de variation de niveau seuil avec les variations de niveau de la sortie de l'amplificateur différentiel (129).

21. Système selon la revendication 20, dans lequel le circuit (70) de variation de niveau seuil comporte un intégrateur qui comprend des condensateurs pour effectuer les opérations individuelles de maintien d'échantillons pour les sorties des côtés d'ondes de polarisation V et H et un condensateur de filtrage qui produit une tension moyenne ($V_a$) entre les tensions aux bornes produites par les condensateurs de maintien d'achantillons.

# Fig. 1

# Fig. 2A

I 0 I 0 0 I I 0 I I I 0

~CR

# Fig. 2 B

V-POLARIZED WAVE

CRv

H-POLARIZED WAVE

CRh

*Fig. 3*

114 (123)   CRv (CRv)

TO 116 (121) ←

CRh (CRh)

*Fig. 4A*

112

← CR

B   A $\frac{\lambda g}{4}$   C

$\frac{\lambda g}{4}$

$\overrightarrow{CR}v$   $D_1$   $D_2$   $\overleftarrow{CR}h$

B'   C'

A'

LPF   LPF

↕TD

112

CR

↓TD

CRh   ↓TD

LPF   WG

CRv

*Fig. 4B*

3

## *Fig. 5A*

## *Fig. 5B*

4

# Fig. 6

<u>50</u>

# Fig. 7

# Fig. 8

1 0 1 0 1 1 0 0 0 1 0 0 0

V-POLARIZED WAVE $V_v$

H-POLARIZED WAVE $V_h$

TH

$V_a$

TH'

# Fig. 9

FROM 129 — RD

130

70

$\int$

*Fig. 10A*

# Fig. 10 B

0 115 385

8

# Fig. IO C

# Fig. 10 D

*Fig. 10E*

0 115 385

Fig. 11

V-POLARIZED WAVE

H-POLARIZED WAVE

(00) (01) (10) (11)

$2/3$ $1/3$

$1/3$ $2/3$

1

0 115 385

## Fig. 12A

## Fig. 12B

## Fig. 13

142

TD → S/P → (b1/b2) → D/A·V → TO 141v  [152v]

→ D/A·H → TO 141h  [152h]

151

## Fig. 14

ATT

CRv (CRh) → 161 → TO 114

162  163

164  165

FROM 152v(152h)

## Fig. 16

171

CLK →

TIM →

SFT REG  172

→ CLK'  173

14

# Fig. 15